# EUROPEAN PATENT SPECIFICATION

(11) **EP 3 020 571 B1**
(45) Date of publication and mention of the grant of the patent: **12.12.2018**
(21) Application number: 14822814.1
(22) Date of filing: 30.06.2014
(51) Int. Cl.: B60C 9/02, B60C 5/01, B60C 13/00, B60C 15/00, B60C 5/00, B60C 9/18, B60C 7/00

(54) **TIRE**
REIFEN
PNEUMATIQUE

(30) Priority: 11.07.2013 JP 2013145806
(43) Date of publication of application: 18.05.2016
(73) Proprietor: Bridgestone Corporation, Tokyo 104-8340 (JP)
(72) Inventor: KOUNO, Yoshihide, Tokyo 104-8340 (JP); KON, Seiji, Tokyo 104-8340 (JP)
(74) Representative: Oxley, Robin John George
(86) International application number: PCT/JP2014/067454
(87) International publication number: WO 2015/005171

(56) References cited:
- EP-A1- 0 009 018
- WO-A1-2004/091939
- WO-A1-2013/047525
- WO-A2-01/54927
- JP-A- S5 539 398
- JP-A- 2005 178 669
- JP-A- 2006 514 589

## Description

### Technical Field

The present invention relates to a tire in which a tire frame member is formed using resin material.

### Background Art

Tires formed using rubber, organic fiber material, or a steel member are conventionally known. In recent years, there is a demand to make tire frame members of a thermoplastic polymer material such as thermoplastic elastomers (TPE) or thermoplastic resins, from the perspective of weight reduction and ease of recycling. For example, in Japanese Patent Application Laid-Open (JP-A) No. H03-143701, a bead core is covered with a thermoplastic elastomer to form the tire frame member, a reinforcing layer is disposed at the outer circumference of the tire frame member, and a tread member is disposed at the outer circumference thereof and vulcanization bonded thereto.
Document EP0009018-A1 shows a tire according to the preamble of claim 1.

### SUMMARY OF INVENTION

### Technical Problem

However, the conventional example described above does not consider reinforcing a side portion. Moreover, if the side portion is continuously reinforced around the tire circumferential direction, it is conceivable that rigidity in the tire circumferential direction becomes too high with respect to rigidity in the tire radial direction.

In consideration of the above circumstances, an object of the present invention is to improve cut resistant performance, while taking a balance between rigidity in the tire circumferential direction and rigidity in the tire radial direction of a tire into consideration. Solution to Problem

A first aspect of the present invention includes: a tire frame member that is made of a resin material and that includes bead portions, side portions that are connected to a tire radial direction outer side of respective bead portions, and a crown portion, on which a tread is disposed, that is connected to a tire width direction inner side of the side portions and on which a tread is disposed, and reinforcing layers of a reinforcing material covered by a resin material, that extend from the bead portion to the side portion, as far as the crown portion and overlap a belt layer, that are disposed in a row around a tire circumferential direction.

In this tire, reinforcement extending from the bead portion to the side portion is present in the tire frame member, thereby enabling the propagation speed of scratches in the tire frame member to be delayed. The reinforcing layers are arranged in a row around the tire circumferential direction, and are not in a form that is integrally continuous around the tire circumferential direction, such that the rigidity in the tire circumferential direction does not become too high, and there is a good balance with rigidity in the tire radial direction. This enables cut resistant performance to be improved, while taking the balance between rigidity in the tire circumferential direction and rigidity in the tire radial direction of a tire into consideration.

A second aspect is the tire according to the first aspect, wherein outer faces of the reinforcing layers are positioned further toward a tire outer side than one half of the tire frame member in a thickness direction thereof.

In this tire, the outer faces of the reinforcing layers are positioned at an outer face side of the tire frame member, such that durability with respect to bending deformation of the tire is improved.

A third aspect is the tire according to the first aspect or the second aspect, wherein the reinforcing layers are adjacent to each other around the tire circumferential direction and abut each other.

In this tire, the reinforcing layers are disposed so as to contact each other around the tire circumferential direction, thereby enabling cut resistant performance to be further improved.

A fourth aspect is the tire according to any one of the first aspect to the third aspect, wherein the reinforcing layers are fixed to a bead core that is embedded in the bead portion.

In this tire, the reinforcing layers are fixed to the bead core, thereby enabling tensile force occurring in the tire to be borne by the reinforcing layers. This improves resistance to internal pressure.

A fifth aspect is the tire according to any one of the first aspect to the fourth aspect, wherein tire radial direction inner side ends of the reinforcing layers are wound onto the bead core.

In this tire, the reinforcing layers are wound onto the bead core, thereby enabling more of the tensile force occurring in the tire to be borne by the reinforcing layers. Resistance to internal pressure is thereby further improved. This enables the thickness of the tire frame member to be made thinner, thereby enabling the ride quality to be improved.

A sixth aspect is the tire according to any one of the first aspect to the third aspect, wherein tire radial direction inner side ends of the reinforcing layers are positioned further toward a tire radial direction inner side than a rim separation point of the bead portion.

In this tire, the tire radial direction inner side ends of the reinforcing layers are positioned further toward the tire radial direction inner side than the rim separation point of the bead portion, thereby enabling pinch cut when riding over a curb or the like to be suppressed.

### Advantageous Effects of Invention

The tire according to the present invention obtains excellent advantageous effects of enabling cut resistant performance to be improved, while taking the balance between rigidity in the tire circumferential direction and rigidity in the tire radial direction of a tire into consideration.

### BRIEF DESCRIPTION OF DRAWINGS

Fig. 1 and Fig. 2 are related to a first exemplary embodiment, and Fig. 1 is a perspective view illustrating a tire in a state sectioned along the axis of rotation of the tire.
Fig. 2 is an enlarged cross-section illustrating a bead portion.
Fig. 3 to Fig. 5 are related to a second exemplary embodiment, and Fig. 3 is a perspective view illustrating a tire in a state sectioned along the axis of rotation of the tire.
Fig. 4 is a side view illustrating an example of the placement of reinforcing layers.
Fig. 5 is a side view illustrating another example of the placement of reinforcing layers.
Fig. 6A is a perspective view illustrating a reinforcing layer in which a tire radial direction inner side end is formed with a narrow width.
Fig. 6B is a perspective view illustrating a state in which a tire radial direction inner side end of a reinforcing layer is wound onto and fixed to a bead core.
Fig. 7A is a cross-section illustrating an example in which a tire radial direction inner side end of a reinforcing layer is fixed to a side portion of a bead core.
Fig. 7B is a cross-section illustrating an example in which a tire radial direction inner side end of a reinforcing layer is disposed separated from a bead core.

### DESCRIPTION OF EMBODIMENTS

Explanation follows regarding exemplary embodiments of the present invention, with reference to the drawings. In the drawings, the arrow C direction indicates a tire circumferential direction, the arrow R direction indicates a tire radial direction, and the arrow W direction indicates a tire width direction. The tire radial direction is a direction orthogonal to the tire axis (not illustrated in the drawings). The tire width direction is a direction parallel to the axis of rotation of the tire. Note that the tire axial direction is interchangeable with references to the tire width direction.

Note that the method for measuring the dimension of each part is according to the methods listed in the Japan Automobile Tire Manufacturer's Association (JATMA) YEAR BOOK 2013.

### First Exemplary Embodiment

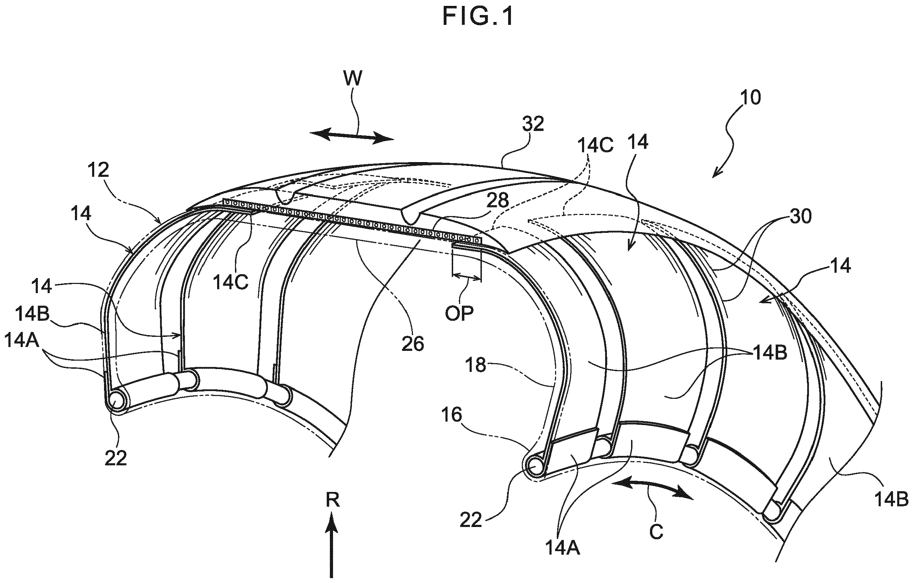

A tire 10 according to an exemplary embodiment illustrated in Fig. 1 includes a tire frame member 12 and reinforcing layers 14.

The tire frame member 12 is made from a resin material, and that includes bead portions 16, side portions 18 that is connected to the tire radial direction outer side of each bead portion 16, and a crown portion 26 that is connected to the tire width direction inner side of the side portions 18 and on which a tread 32 is disposed. Note that "bead portion" referred to herein refers to a range from a tire radial direction inner side end of the tire frame member 12 to 30% of the tire cross section height. The tire frame member 12 has a ring shape about the tire axis. Examples of the resin material configuring the tire frame member 12 include thermoplastic resins (including thermoplastic elastomers), thermoset resins, and other general use resins, as well as engineering plastics (including super engineering plastics). Vulcanized rubber is not included among these resin materials.

Thermoplastic resins (including thermoplastic elastomers) are polymer compounds of materials that soften and flow with increased temperature, and that adopt a relatively hard and strong state when cooled. In the present specification, out of these, distinction is made between polymer compounds forming materials that soften and flow with increasing temperature, that adopt a relatively hard and strong state on cooling, and that have a rubber-like elasticity, considered to be thermoplastic elastomers, and polymer compounds forming materials that soften and flow with increasing temperature, that adopt a relatively hard and strong state on cooling, and do not have a rubber-like elasticity, considered to be non-elastomer thermoplastic resins.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic resin materials have, for example, a deflection temperature under load (at 0.45 MPa during loading), as defined by ISO 75-2 or ASTM D648, of 78°C or greater, a tensile yield strength, as defined by JIS K7113, of 10 MPa or greater, and a tensile elongation at break (JIS K7113), also as defined by JIS K7113, of 50% or greater. Materials with a Vicat softening temperature, as defined by JIS K7206 (method A), of 130°C may be employed.

Thermoset resins are polymer compounds that cure to form a 3 dimensional mesh structure with increasing temperature. Examples of thermoset resins include phenolic resins, epoxy resins, melamine resins, and urea resins.

In addition to the thermoplastic resins (including thermoplastic elastomers) and thermoset resins already listed above, general purpose resins may also be employed as the resin material, such as (meth)acrylic-based resins, EVA resins, vinyl chloride resins, fluororesins, and silicone-based resins.

A bead core 22 is embedded in each bead portion 16. The thermoplastic material configuring the bead core 22 is preferably an olefin-based, ester-based, amide-based, or urethane-based TPE, or a TPV that is a mixed, part rubber-based resin. Such a thermoplastic material preferably has, for example, a deflection temperature under load (at 0.45 MPa during loading), as defined by ISO 75-2 or ASTM D648, of 75 °C or greater, a tensile yield elongation, also as defined by JIS K7113, of 10% or greater, a tensile elongation at break, also as defined by JIS K7113, of 50% or greater, and a Vicat softening temperature, as defined by JIS K7113 (method A), of 130 °C or greater.

The bead core 22 has an annular shape, and is formed of a thermoplastic material with a higher elasticity than the resin material of the tire frame member 12. The elasticity of the bead core 22 is preferably 1.5 times or greater, and is more preferably 2.5 times or greater, than the elasticity of the tire frame member 12. When under 1.5 times, it is conceivable that, when fitting the tire 10 to a rim 24 and inflating with air to raise the internal pressure, the bead portions 16 rise up toward the tire radial direction outer side and come off the rim 24. The bead core 22 may be formed by insert molding (extrusion molding) or the like using a hard resin, and there is no particular limitation to the method of forming the bead core 22.

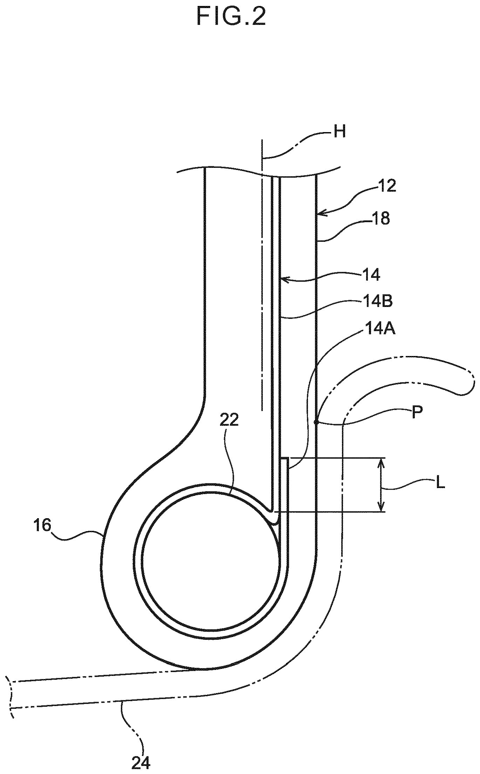

As illustrated in Fig. 2, the bead core 22 has a circular cross-section profile, for example. The bead core 22 may be formed in a scalloped shape such that the bead core radius varies according to the position around the tire circumferential direction. In such cases, the bead core 22 itself is capable of a certain degree of elongation, and more easily fitted to the rim. The bead core 22 is not limited to being formed of resin (thermoplastic material), and may be formed by stacking resin-covered steel cord in a spiral shape around the tire circumferential direction.

In the tire frame member 12, the crown portion 26 is connected to the tire radial direction outer side of the side portions 18. A belt layer 28 is provided around the outer circumference of the crown portion 26. The belt layer 28 is configured by winding a resin-covered cord in a spiral shape around the tire circumferential direction, for example.

The tread 32 is provided at the tire radial direction outer side of the crown portion 26 and the belt layer 28. The tread 32 is, for example, a pre-cured tread (PCT) formed using rubber. The tread 32 is formed from a rubber having superior abrasion resistance to that of the resin material forming the tire frame member 12. The same types of tread rubber as those employed in conventional rubber-made pneumatic tires may be employed as the rubber, for example, styrene-butadiene rubber (SBR). The tread 32 may be configured by employing another type of resin material having superior abrasion resistance characteristics to the resin material forming the tire frame member 12.

The reinforcing layers 14 are configured by a reinforcing material 30 that is covered by a resin material and extend from the bead portions 16 to the side portions 18, and that are disposed in a row around the tire circumferential direction with spacings therebetween. In an extended state in plan view, the reinforcing layers 14 are formed longer in the tire radial direction than in the tire circumferential direction. The same resin material as the resin material configuring the tire frame member 12, for example, may be employed as this resin material. One face, or both faces of the reinforcing material 30 may be covered by the resin material. In cases in which both faces of the reinforcing material 30 are covered by the resin material, the reinforcing material 30 can be disposed at the thickness direction center of the reinforcing layers 14. In cases in which both faces are covered, different resin materials may be employed on one face and on the other face.

In Fig. 1 and Fig. 2, the reinforcing material 30 is, for example, a twisted cord or a collective body of plural filaments. The material of the reinforcing material 30 is, for example, aliphatic polyamide, polyethylene terephthalate, glass, aramid, or a metal such as steel. The reinforcing material 30 extends along at least the tire radial direction in the reinforcing layers 14. Reinforcing material 30 extending around the tire circumferential direction may be combined with this reinforcing material 30, and these reinforcing materials 30 may be overlapped so as to mutually intersect each other. In such cases, the reinforcing materials 30 may be woven or braided together to configure a cloth shape. Note that the reinforcing material 30 may be sloped with respect to the tire radial direction or the tire circumferential direction.

As illustrated in Fig. 2, a tire radial direction inner side end 14A of each reinforcing layer 14 is positioned further to the tire radial direction inner side than a rim separation point P of the bead portion 16. Note that rim separation point P referred to herein is a point where a tire separates from a rim flange when fitted to the appropriate rim according to the dimension of the tire as listed in the Japan Automobile Tire Manufacturer's Association (JATMA) YEAR BOOK 2013 in an unloaded state at the internal pressure specified therein. Specifically, the reinforcing layer 14 is fixed to the bead core 22 embedded in the bead portion 16. Specifically, for example, the tire radial direction inner side end 14A of the reinforcing layer 14 is wound onto the bead core 22 so as to encircle the bead core 22, folded back on itself from the tire inner side toward the outer side, and joined to the reinforcing layer 14 itself. Hot air welding, or thermo-compression bonding using a hot plate, are preferable as a joining means. Stitching may be employed as another joining method. A joint length L is 3 mm or more, more preferably 5 mm or more, and still more preferably 15 mm or more. Note that the winding (folding back on itself) of the tire radial direction inner side end 14A of the reinforcing layer 14 may be from the tire outer side toward the inner side.

As illustrated in Fig. 1, a tire radial direction outer side end 14C of each reinforcing layer 14 passes from the bead portion 16 of the tire frame member 12 across the side portion 18, extends as far as the crown portion 26, and overlaps the belt layer 28. An overlap amount OP with the belt layer 28 from an end portion of the belt layer 28 toward the tire width direction center side is preferably 5 mm, or greater.

As illustrated in Fig. 2, an outer face 14B of each reinforcing layer 14 is positioned further toward the tire outer side than one half of the tire frame member 12 in a thickness direction thereof (the position of a line H). In other words, the outer face 14B of the reinforcing layer 14 is positioned at an outer face side of the tire frame member 12. The reinforcing layer 14 may be exposed at the outer face of the tire frame member 12.

### Operation

Explanation follows regarding operation of the present exemplary embodiment configured as described above. In the tire 10 according to the present exemplary embodiment in Fig. 1, the reinforcing layers 14 are present at least at the side portions 18 of the tire frame member 12, thereby enabling the propagation speed of scratches on the tire frame member 12 to be delayed. The reinforcing layers 14 are arranged in a row around the tire circumferential direction, and are not in a form that is integrally continuous around the tire circumferential direction, such that the rigidity in the tire circumferential direction does not become too high, and there is a good balance with the rigidity in the tire radial direction.

The outer face of each reinforcing layer 14 is positioned at the outer face side of the tire frame member 12, such that durability with respect to bending deformation of the tire is improved. Furthermore the tire radial direction inner side end of each reinforcing layer 14 is positioned further to the tire radial direction inner side than the rim separation point P of the bead portion 16, thereby enabling pinch cut when riding up onto a curb or the like to be suppressed. The reinforcing layer 14 is anchored to the bead core 22, thereby enabling tensile force occurring in the tire to be borne by the reinforcing layer 14. Resistance with respect to internal pressure is thereby improved. This also enables the thickness of the tire frame member 12 to be made thinner, thereby enabling ride quality to be improved.

In this manner, the tire 10 according to the present exemplary embodiment enables cut resistant performance to be improved, while taking the balance between rigidity in the tire circumferential direction and rigidity in the tire radial direction into consideration.

### Second Exemplary Embodiment

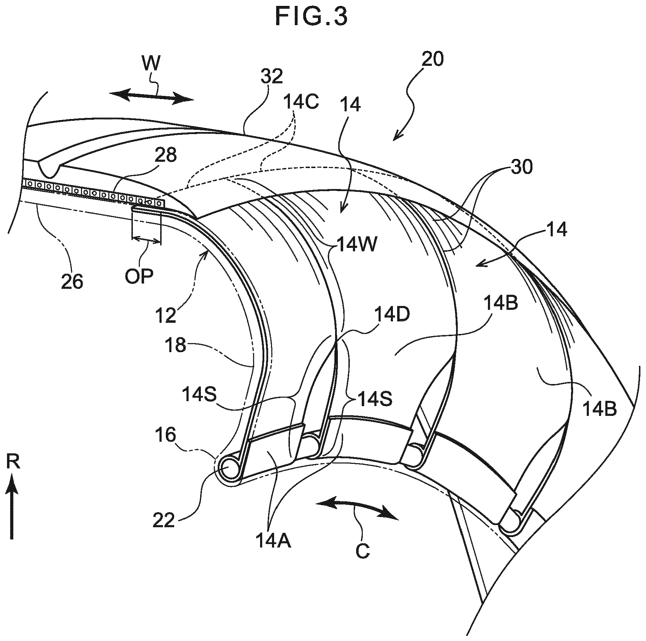

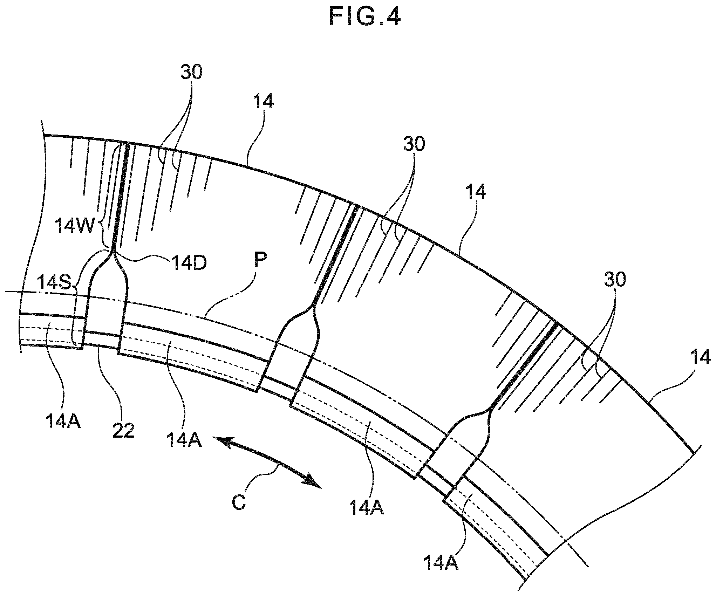

In Fig. 3 and Fig. 4, in a tire 20 according to an exemplary embodiment, reinforcing layers 14 that are adjacent around the tire circumferential direction abut each other. The reinforcing layers 14 abut each other at portions including at least the maximum tire width positions. Abutting includes cases in which end portions of the reinforcing layers 14 abut each other around the tire circumferential direction, and cases in which the end portions of the reinforcing layers 14 overlap each other in the tire radial direction.

A tire radial direction outer side wide width portion 14W, and a tire radial direction inner side narrow width portion 14S are formed to each reinforcing layer 14. The wide width portion 14W encompasses the maximum tire width portion on the side portion 18. The wide width portions 14W abut each other. The narrow width portions 14S are separated from each other around the tire circumferential direction.

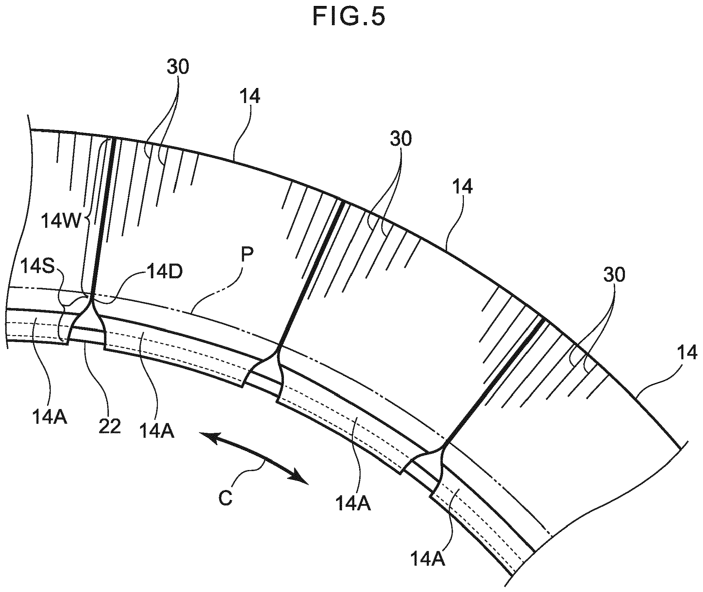

In the example illustrated in Fig. 4, a boundary 14D between the wide width portion 14W and the narrow width portion 14S is positioned slightly further toward the tire radial direction inner side than the maximum tire width position. The position of the boundary 14D is not limited thereto, and may, as illustrated in Fig. 5, be positioned further toward tire radial direction inner side. In the example illustrated in Fig. 5, the boundary 14D is positioned further toward the tire radial direction inner side than the rim separation point P of the bead portion 16. This enables pinch cut when riding over a curb or the like to be suppressed.

In the tire 20 according to the present exemplary embodiment, the reinforcing layers 14 are disposed in contact with each other around the tire circumferential direction, thereby enabling cut resistant performance to be further improved.

Other portions are similar to the first exemplary embodiment, and so the same reference numerals are appended to the same portions in the drawings, and explanation thereof is omitted.

### Other Exemplary Embodiments

In the first exemplary embodiment, other reinforcing layers (not illustrated in the drawings) may be disposed between the reinforcing layers 14 that are adjacent to each around the tire circumferential direction. In such cases, the other reinforcing layers and the reinforcing layers 14 may partially overlap each other. Configuration may also be such that one tire circumferential direction side of each other reinforcing layer partially overlaps the adjacent reinforcing layer 14, and the other tire circumferential direction side is provided with a gap of 0.1 mm or greater, for example, without overlapping the adjacent reinforcing layer 14. In the second exemplary embodiment, the reinforcing layers 14 that are adjacent to each other around the tire circumferential direction may partially overlap each other.

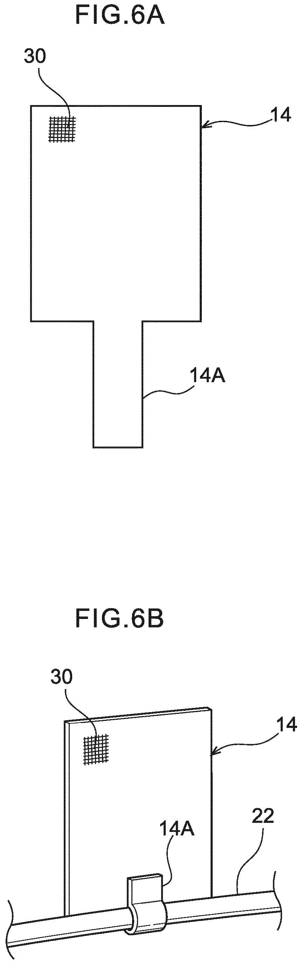

As illustrated in Fig. 6A and Fig. 6B, the tire radial direction inner side end 14A of each reinforcing layer 14 may be formed with a narrow width, and the tire radial direction inner side end 14A may be wound onto the bead core 22, then folded back on itself. This enables the occurrence of creasing in the reinforcing layer 14 due to the curvature of the bead core 22 to be suppressed.

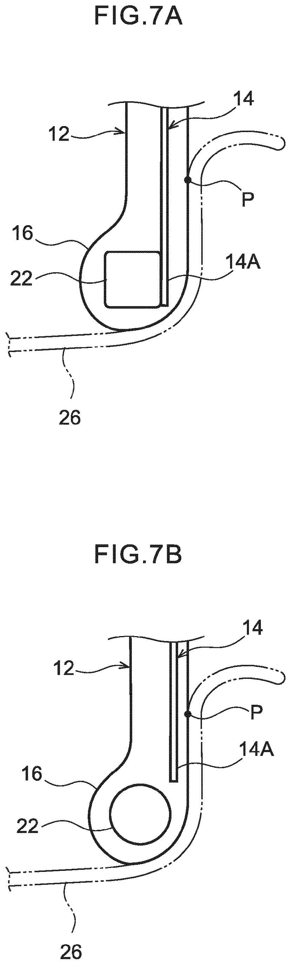

As illustrated in Fig. 7A, the tire radial direction inner side end 14A of each reinforcing layer 14 may be fixed by adhesion or the like to the side of the bead core 22. In such cases, the bead core 22 preferably has a polygonal shaped cross-section. As illustrated in Fig. 7B, the tire radial direction inner side end 14A of the reinforcing layer 14 may be separated from the bead core 22. In such cases, the tire radial direction inner side end 14A of the reinforcing layer 14 is preferably positioned further toward the tire radial direction inner side than the rim separation point P of the bead portion 16. In cases in which plural bead cores 22 are provided to a single bead portion 16, the tire radial direction inner side end 14A of the reinforcing layer 14 may be sandwiched between two bead cores 22.

In Fig. 2, the outer face 14B of the reinforcing layer 14 is positioned further toward the tire outer side than one half of the tire frame member 12 in a thickness direction thereof (the line H position); however, the position of the outer face 14B is not limited thereto. For example, the outer face 14B may be positioned at, or further toward the tire inner side than, one half of the tire frame member 12 in a thickness direction thereof (the line H position).

### Explanation of the Reference Numerals

- 10: tire
- 12: tire frame member
- 14: reinforcing layer
- 14A: tire radial direction inner side end
- 16: bead portion
- 18: side portion
- 20: tire
- 22: bead core
- 24: rim
- 26: crown portion
- 30: reinforcing material
- 32: tread
- P: rim separation point P

## Claims

1. A tire (10), comprising:
a tire frame member (12) that is made of a resin material and that includes: bead portions (16); side portions (18) that are connected to a tire radial direction outer side of respective bead portions (16); and a crown portion (26) that is connected to a tire width direction inner side of the side portions (18) and on which a tread (32) is disposed; and
reinforcing layers (14) of a reinforcing material covered by a resin material, that are disposed in a row around a tire circumferential direction, **characterised in that**:
the reinforcing layers (14) each respectively extend from the bead portion (16) to the side portion (18), as far as the crown portion (26) and overlap a belt layer (28).

2. The tire (10) of claim 1, wherein outer faces of the reinforcing layers (14) are positioned further toward a tire (10) outer side than one half of the tire frame member (12) in a thickness direction thereof.

3. The tire (10) of claim 1 or claim 2, wherein the reinforcing layers (14) are adjacent to each other around the tire circumferential direction and abut each other.

4. The tire (10) of any one of claim 1 to claim 3, wherein the reinforcing layers (14) are fixed to a bead core (22) that is embedded in the bead portion (16).

5. The tire (10) of claim 4, wherein tire radial direction inner side ends of the reinforcing layers (14) are wound onto the bead core (22).

6. The tire (10) of any one of claim 1 to claim 3, wherein tire radial direction inner side ends of the reinforcing layers (14) are positioned further toward a tire radial direction inner side than a rim separation point of the bead portion (16).

## Patentansprüche

1. Reifen (10), der Folgendes umfasst:
ein Reifengerüstelement (12), das aus einem Harzmaterial hergestellt ist und das Folgendes einschließt: Wulstabschnitte (16), Seitenabschnitte (18), die mit einer in Reifenradialrichtung äußeren Seite jeweiliger Wulstabschnitte (16) verbunden sind, und einen Scheitelabschnitt (26), der mit einer in Reifenbreitenrichtung inneren Seite der Seitenabschnitte (18) verbunden ist und auf dem eine Lauffläche (32) angeordnet ist, und
Verstärkungslagen (14) aus einem Verstärkungsmaterial, das durch ein Harzmaterial bedeckt ist, die in einer Reihe um eine Reifenumfangsrichtung angeordnet sind, **dadurch gekennzeichnet, dass**:
die Verstärkungslagen (14) sich jeweils von dem Wulstabschnitt (16) zu dem Seitenabschnitt (18), bis hin zu dem Scheitelabschnitt (26) erstrecken und eine Gürtellage (28) überlappen.

2. Reifen (10) nach Anspruch 1, wobei die Außenflächen der Verstärkungslagen (14) weiter zu einer Außenseite des Reifens (10) hin angeordnet sind als eine Hälfte des Reifengerüstelements (12) in einer Dickenrichtung desselben.

3. Reifen (10) nach Anspruch 1 oder Anspruch 2, wobei die Verstärkungslagen (14) einander um die Reifenumfangsrichtung benachbart sind und aneinander anstoßen.

4. Reifen (10) nach einem der Ansprüche 1 bis 3, wobei die Verstärkungslagen (14) an einem Wulstkern (22) befestigt sind, der in dem Wulstabschnitt (16) eingebettet ist.

5. Reifen (10) nach Anspruch 4, wobei die in Reifenradialrichtung inneren Seitenenden der Verstärkungslagen (14) auf den Wulstkern (22) gewickelt sind.

6. Reifen (10) nach einem der Ansprüche 1 bis 3, wobei die in Reifenradialrichtung inneren Seitenenden der Verstärkungslagen (14) weiter zu einer in Reifenradialrichtung inneren Seite hin angeordnet sind als ein Felgentrennungspunkt des Wulstabschnitts (16).

## Revendications

1. Bandage pneumatique (10), comprenant :
un élément de cadre du bandage pneumatique (12) composé d'un matériau de résine et incluant : des parties de talon (16), ; des parties latérales (18) connectées à un côté externe, dans la direction radiale du bandage pneumatique, des parties de talon respectives (16) ; et une partie de sommet (26) connectée à un côté interne, dans la direction de la largeur du bandage pneumatique, des parties latérales (18), et sur laquelle est disposée une bande de roulement (32) ; et
des couches de renforcement (14) composées d'un matériau de renforcement recouvert d'un matériau de résine, disposées dans une rangée autour d'une direction circonférentielle du bandage pneumatique, **caractérisé en ce que** :
les couches de renforcement (14) s'étendent chacune respectivement de la partie de talon (16) vers la partie latérale (18), jusqu'à la partie de sommet (26), et chevauchent une couche de ceinture (28).

2. Bandage pneumatique (10) selon la revendication 1, dans lequel les faces externes des couches de renforcement (14) sont positionnées davantage vers un côté externe du bandage pneumatique (10) qu'une moitié de l'élément de cadre du bandage pneumatique (12), dans une direction de l'épaisseur de celui-ci.

3. Bandage pneumatique (10) selon les revendications 1 ou 2, dans lequel les couches de renforcement (14) sont adjacentes l'une à l'autre autour de la direction circonférentielle du bandage pneumatique, et butent l'une contre l'autre.

4. Bandage pneumatique (10) selon l'une quelconque des revendications 1 à 3, dans lequel les couches de renforcement (14) sont fixées sur une tringle (22) noyée dans la partie de talon (16).

5. Bandage pneumatique (10) selon la revendication 4, dans lequel les extrémités latérale internes, dans la direction radiale du bandage pneumatique, des couches de renforcement (14) sont enroulées sur la tringle (22).

6. Bandage pneumatique (10) selon l'une quelconque des revendications 1 à 3, dans lequel les extrémités latérales internes, dans la direction radiale du bandage pneumatique, des couches de renforcement (14) sont positionnées davantage vers un côté interne, dans la direction radiale du bandage pneumatique, qu'un point de séparation de la jante de la partie de talon (16).
